(19) Europäisches Patentamt / European Patent Office / Office européen des brevets

(11) EP 4 509 618 A1

(12) EUROPEAN PATENT APPLICATION
published in accordance with Art. 153(4) EPC

(43) Date of publication:
19.02.2025 Bulletin 2025/08

(21) Application number: 23827214.0

(22) Date of filing: 21.06.2023

(51) International Patent Classification (IPC):
$C21B\ 7/24^{(2006.01)}$  $C21C\ 5/44^{(2006.01)}$
$F27D\ 1/00^{(2006.01)}$  $F27D\ 1/16^{(2006.01)}$
$G01N\ 29/06^{(2006.01)}$

(52) Cooperative Patent Classification (CPC):
C21B 7/24; C21C 5/44; F27D 1/00; F27D 1/16;
G01N 29/06

(86) International application number:
PCT/JP2023/022848

(87) International publication number:
WO 2023/249031 (28.12.2023 Gazette 2023/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.06.2022 JP 2022101839

(71) Applicant: JFE Steel Corporation
Tokyo 100-0011 (JP)

(72) Inventors:
• ICHIKAWA, Takuto
Tokyo 100-0011 (JP)
• MATSUI, Yutaka
Tokyo 100-0011 (JP)
• KASHIWABARA, Yuta
Tokyo 100-0011 (JP)
• KOBAYASHI, Naoto
Tokyo 100-0011 (JP)
• NISHIMURA, Nozomu
Tokyo 100-0011 (JP)

(74) Representative: Grünecker Patent- und
Rechtsanwälte
PartG mbB
Leopoldstraße 4
80802 München (DE)

(54) REFRACTORY MATERIAL STATE VISUALIZATION METHOD, REFRACTORY MATERIAL REPAIR METHOD, AND REFRACTORY MATERIAL STATE VISUALIZATION DEVICE

(57) An input unit 101 inputs an elastic wave 21 to a furnace wall 11 having a refractory brick 16 that is a refractor. A reception unit 102 receives a reflection wave 22 of the elastic wave 21. A control unit 103 determines a frequency characteristic of the reflection wave 22, determines a distance characteristic from the frequency characteristic, and generates a map showing likelihood of a reflection position in the refractory brick 16 based on the distance characteristic. The state of the refractory brick 16 is thus visualized.

FIG. 2

EP 4 509 618 A1

**Description**

TECHNICAL FIELD

The present invention relates to a refractory state visualization method, a refractory repair method, and a refractory state visualization apparatus.

BACKGROUND ART

An industrial furnace such as a blast furnace has a furnace wall that generally includes a steel shell, an unshaped refractory, and a refractory brick (shaped refractory) in this order from the outside to the inside.

The refractory brick that is a refractory situated innermost wears from the furnace core side and, in addition, experiences generation of cracks in its interior in some cases. In particular, a refractory brick in a furnace bottom of a blast furnace is ceaselessly exposed to molten iron even during an outage and hence wears significantly. Wear of a refractory brick or generation of cracks in a refractory brick shortens the life of a furnace body.

Accordingly, it is important to understand the state of a refractory brick from the viewpoint of maintenance management of the furnace, and, hence, there have been conventionally proposed methods for measuring the remaining thickness of a refractory brick (Patent Literatures 1 and 2) .

CITATION LIST

PATENT LITERATURES

Patent Literature 1: JP 62-297710 A
Patent Literature 2: JP 8-219751 A

SUMMARY OF INVENTION

TECHNICAL PROBLEMS

The methods described in Patent Literatures 1 and 2 merely measure the remaining thickness of a refractory brick.

From the viewpoint of maintenance management of a furnace, it is desired not only to find the remaining thickness of a refractory brick but to visually find the refractory brick state including cracks or the like generated in the interior of a refractory brick.

The present invention has been made in view of the foregoing and has an object of visualizing the state of a refractory such as a refractory brick.

SOLUTION TO PROBLEMS

The present inventors found, through an earnest study, that employing the configuration described below enables achievement of the above-mentioned object, and the invention has been completed.

Specifically, the present invention provides the following [1] to [4].

[1] A refractory state visualization method comprising: a step of inputting an elastic wave to a furnace wall having a refractory; a step of receiving a reflection wave of the elastic wave; a step of determining a frequency characteristic of the reflection wave; a step of determining a distance characteristic from the frequency characteristic; and a step of generating a map showing likelihood of a reflection position in the refractory based on the distance characteristic.

[2] The refractory state visualization method according to [1], wherein the distance characteristic includes a plurality of distance characteristics, and the map is generated by synthesizing maps that are separately generated for the plurality of distance characteristics.

[3] A refractory repair method comprising repairing a refractory based on a map generated by the refractory state visualization method according to [1] or [2].

[4] A refractory state visualization apparatus comprising: an input unit adapted to input an elastic wave to a furnace wall having a refractory; a reception unit adapted to receive a reflection wave of the elastic wave; and a control unit adapted to determine a frequency characteristic of the reflection wave, determine a distance characteristic from the frequency characteristic, and generate a map showing likelihood of a reflection position in the refractory based on the distance characteristic.

ADVANTAGEOUS EFFECTS OF INVENTION

The present invention can visualize the state of a refractory such as a refractory brick.

BRIEF DESCRIPTION OF DRAWINGS

[FIG. 1] FIG. 1 is a cross-sectional view showing part of a furnace wall when viewed from an upper side of a CS-structure blast furnace.
[FIG. 2] FIG. 2 is a schematic view showing a state visualization apparatus along with a furnace wall.
[FIG. 3] FIG. 3 is a perspective view showing the furnace wall with reception units being attached to a steel shell.
[FIG. 4] FIG. 4 is a conceptual diagram of an amplitude spectrum.
[FIG. 5] FIG. 5 is a conceptual diagram of a distance characteristic graph.
[FIG. 6] FIG. 6 is a conceptual diagram of a map based on a reception result of a reception unit at point C1.
[FIG. 7] FIG. 7 is a conceptual diagram of a map based on a reception result of a reception unit at point A1.
[FIG. 8] FIG. 8 is a conceptual diagram of a synthesized map.
[FIG. 9] FIG. 9 is a conceptual diagram showing a voxel group.
[FIG. 10] FIG. 10 is a conceptual diagram showing another voxel group.
[FIG. 11] FIG. 11 is a flowchart showing an example of a processing flow performed by a control unit.
[FIG. 12] FIG. 12 is a flowchart showing another example of a processing flow performed by the control unit.
[FIG. 13] FIG. 13 is a functional block diagram of the state visualization apparatus.
[FIG. 14] FIG. 14 is a perspective view showing a furnace wall with a reception unit being attached to a steel shell.
[FIG. 15] FIG. 15 is a conceptual diagram of a distance characteristic calculated by a distance characteristic calculation unit.
[FIG. 16] FIG. 16 is a perspective view showing a furnace wall with M reception units being attached to a steel shell.
[FIG. 17] FIG. 17 is a schematic view showing a display unit displaying a heat map.
[FIG. 18] FIG. 18 is a flowchart showing an example of a processing flow performed by the state visualization apparatus.

DESCRIPTION OF EMBODIMENT

[State Visualization Apparatus]

Below, described is a state visualization apparatus for a refractory (also simply referred to as "state visualization apparatus"). The following description covers both a refractory state visualization method and a refractory repair method.
First, a furnace wall of a blast furnace will be described.
While a furnace wall of a conventional blast furnace has a three layer structure including a steel shell, an unshaped refractory, and a refractory brick (shaped refractory) in this order, most of blast furnaces recently have a cooling stave (CS) structure.

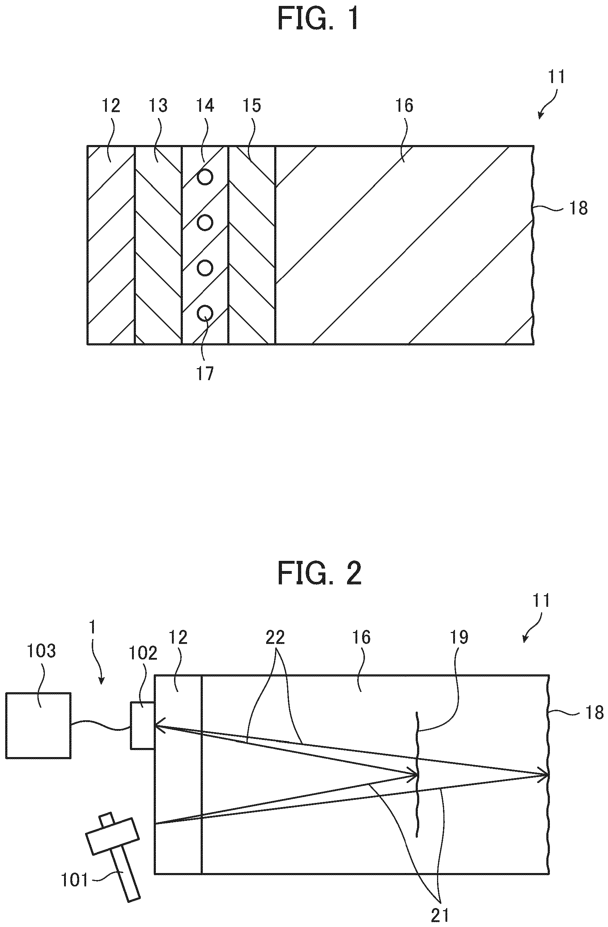

FIG. 1 is a cross-sectional view showing part of a furnace wall 11 when viewed from an upper side of a CS-structure blast furnace. Here, FIG. 1 is a cross-sectional view of the furnace wall 11 constituting a furnace bottom.
As shown in FIG. 1, the furnace wall 11 of the CS-structure blast furnace (hereinafter, also simply referred to as "blast furnace") has a five layer structure. That is, the furnace wall 11 includes a steel shell 12, an unshaped refractory 13, a copper plate 14, an unshaped refractory 15, and a refractory brick 16 (shaped refractory) in this order from the outside to the inside (from the left side to the right side in FIG. 1).
As the unshaped refractory 13 and the unshaped refractory 15, a stamp material is suitably used.
A stamp material and a castable refractory can be adopted as the unshaped refractories and are different from each other in composition and installation method. Specifically, a stamp material is made of a carbon material as a main component and is rammed with a rammer, whereas a castable refractory is made of alumina cement as a main component and is hardened through drying.
As the refractory brick 16, a high alumina brick, a silicon carbide brick, or another conventionally known brick for a blast furnace is used. The refractory brick 16 is exposed to molten iron (not shown) to thereby wear out.
The copper plate 14 is provided with a plurality of holes 17. The blast furnace is cooled by water passing through the holes 17 from the upper side toward the lower side of the blast furnace.

Meanwhile, conventionally, the remaining thickness of a refractory brick is sometimes estimated by monitoring temperature of the refractory brick with use of a thermocouple and calculating heat transfer based on the temperature.

However, since a CS-structure blast furnace has the foregoing cooling structure and is thus excellent in heat insulation, it may be difficult to estimate the remaining thickness of a refractory brick through calculation of heat transfer.

Therefore, a state visualization apparatus 1 described below is preferably used. The state, including the remaining thickness, of a refractory brick can be found accordingly.

FIG. 2 is a schematic view showing the state visualization apparatus 1 along with the furnace wall 11.

Other constituent members of the furnace wall 11 (such as the unshaped refractory 13) than the steel shell 12 and the refractory brick 16 are omitted in FIG. 2.

The state visualization apparatus 1 includes at least an input unit 101, a reception unit 102, and a control unit 103. An example thereof is constituted of an impact hammer as the input unit 101, an accelerometer as the reception unit 102, and an amplifier, an oscilloscope and a personal computer (PC) as the control unit 103.

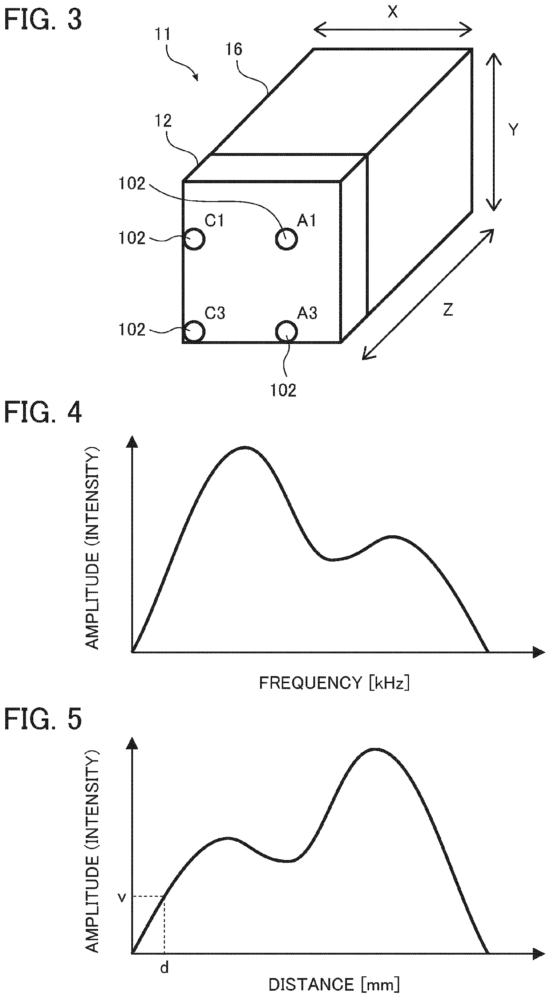

FIG. 3 is a perspective view showing the furnace wall 11 with reception units 102 being attached to the steel shell 12. FIG. 3 also omits other constituent members (such as the unshaped refractory 13) of the furnace wall 11 than the steel shell 12 and the refractory brick 16. In addition, FIG. 3 shows the X axis direction, the Y axis direction, and the Z axis direction. The Z axis direction coincides with the thickness direction of the refractory brick 16.

The reception units 102, i.e., accelerometer, are provided on a surface of the steel shell 12 and are arranged, in one example, at four points (point A1, point A3, point C1, and point C3) on the surface of the steel shell 12 so as to form a rectangular shape as shown in FIG. 3.

Here, reference is again made to FIG. 2.

As shown in FIG. 2, the surface of the steel shell 12 (at each point at which the reception unit 102 is arranged, for instance) is struck by the input unit 101, i.e., an impact hammer to thereby apply vibration to the furnace wall 11 including the refractory brick 16. As a result, an elastic wave 21 is input to the furnace wall 11. Hereinbelow, the point, on the surface of the steel shell 12, struck by the input unit 101 may be called "struck point" for convenience.

The elastic wave 21 propagates though the interior of the furnace wall 11 and is reflected by an end 18 of the refractory brick 16 to thereby turn into a reflection wave 22. The reception unit 102, i.e., an accelerometer, receives (detects) this reflection wave 22 as an acceleration signal. Hereinbelow, a point, on the surface of the steel shell 12, at which the reception unit 102 for receiving the reflection wave 22 is arranged may be called "measurement point" for convenience.

First, described based on FIGS. 4 to 6 is a processing flow the control unit 103 performs when a map (described later) is generated in a case where the measurement point and the struck point are points C1 and A1, respectively.

The control unit 103 analyzes the acceleration signal received by the reception unit 102 to thereby determine the frequency characteristic. In other words, the acceleration signal is converted into an amplitude spectrum (frequency spectrum) to thereby determine a resonant frequency (peak frequency).

Prior to this process, the relationship (hereinafter, also referred to as "conversion model") between the resonant frequency and the thickness of the refractory brick 16 (at reflection position of the elastic wave 21) is preliminarily determined by simulation (e.g., elastic wave propagation simulation) or the like. The conversion model is stored in the control unit 103 or an external storage apparatus (not shown) in advance.

The control unit 103 inputs the resonant frequency determined from the acceleration signal into the conversion model to thereby determine the distance characteristic that indicates the relationship between an amplitude and a distance from the measurement point (point C1).

Meanwhile, in a case where a crack 19 is generated in the refractory brick 16, the elastic wave 21 is reflected by not only the end 18 but also the crack 19. A conceptual diagram of an amplitude spectrum obtained from the reflection wave 22 (acceleration signal) in this case is shown in FIG. 4.

FIG. 4 is a conceptual diagram of an amplitude spectrum (measurement point: point C1, struck point: point A1); the vertical axis shows an amplitude (intensity), and the horizontal axis shows a frequency. As an example, in the amplitude spectrum in FIG. 4, a peak on the low frequency side indicates a peak due to reflection by the end 18, whereas a peak on the high frequency side indicates a peak due to reflection by the crack 19.

The amplitude spectrum of FIG. 4 is applied to the foregoing conversion model to be thereby converted to a one-dimensional distance characteristic graph (hereinafter, also referred to as "distance characteristic graph") showing the relationship between the amplitude and the distance from the measurement point (distance in Z axis direction). A conceptual diagram of the distance characteristic graph is shown in FIG. 5.

FIG. 5 is a conceptual diagram of the distance characteristic graph (measurement point: point C1, struck point: point A1), and the vertical axis shows an amplitude (intensity), and the horizontal axis shows a distance from the measurement point.

The number of vibration applications to the furnace wall 11 with use of the input unit 101 (number of times a struck point is struck) at each measurement point may be one, or two or more (for instance, three times). In a case of two or more times, the control unit 103 preferably determines a distance characteristic graph based on the acceleration signal for each time.

The control unit 103 next draws a map based on the distance characteristic graph of FIG. 5.

The map is preferably a two-dimensional map or a three-dimensional map.

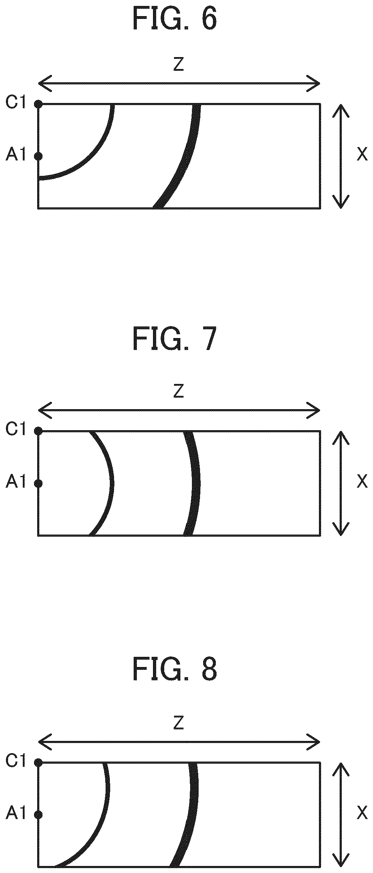

In this embodiment, heat maps (FIGS. 6 to 8) exemplify the map. A heat map is one type of visualization graph which expresses each value of a two-dimensional numerical data (matrix data) as a color or color gradation.

The map (heat map) shows likelihood of a reflection position in the refractory brick 16 as described later and is exemplified by the following two types (a) and (b).

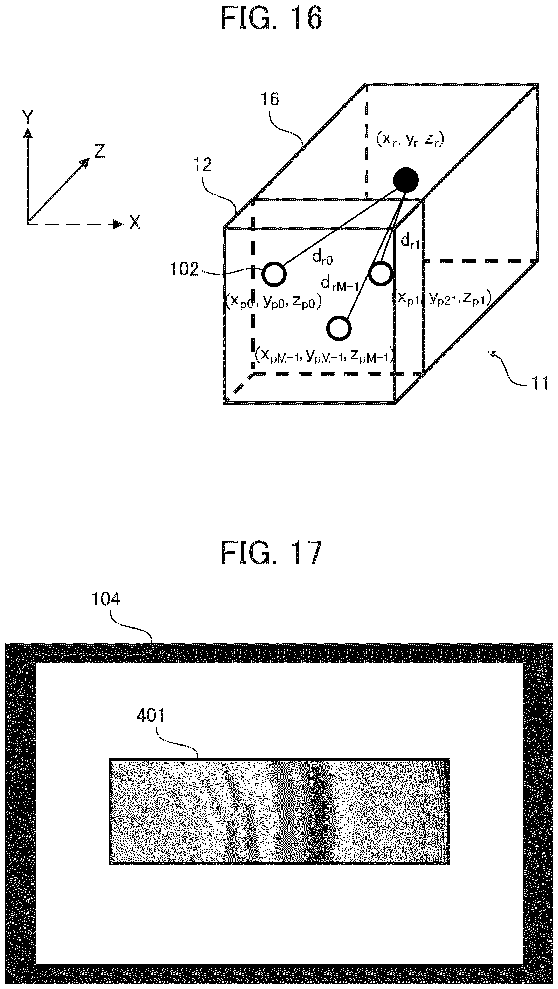

(a) Map with a single measurement point: examples thereof include maps shown in FIGS. 6 and 7 to be described later, in which a distance characteristic graph (e.g., FIG. 5) is developed in a circumferential manner having the measurement point as the center, or is superposed in a spherical manner having the measurement point as the center.
(b) Map with plural measurement points: examples thereof include a map shown in FIG. 8 or FIG. 17 to be described later, in which plural maps (a) described above are synthesized while maintaining the relationship between the distance and the coordinate (positional relationship) of a measurement point. Since there are plural measurement points, the likelihood is more accurate.

In the heat maps shown in FIGS. 6 to 8, a distance from a measurement point is plotted in the vertical axis and the horizontal axis, and an amplitude (intensity) is drawn in color gradation. The amplitude (intensity) may be expressed as a hue.

The heat map may be a three-dimensional heat map or a two-dimensional heat map of an arbitrary cross section selected by a user of a state visualization apparatus 1A.

For drawing the map, the vertical axis is preferably normalized in each distance characteristic graph. The normalization may be carried out by use of the maximum value of the vertical axis or by use of a sum of absolute values of values in the vertical axis.

FIG. 6 is a conceptual diagram of a map based on the reception result of the reception unit 102 at point C1 (measurement point: point C1, struck point: point A1) and shows an XZ plane passing point C1 and point A1 in the furnace wall 11 shown in FIG. 3.

Specifically, the control unit 103 draws the distance characteristic graph of FIG. 5 in an XZ plane having the origin O of the graph as point C1, for instance. Obtained in this manner is the map (FIG. 6) in which the degree of the intensity (vertical axis) at each distance (horizontal axis) in the distance characteristic graph is drawn in an XZ plane.

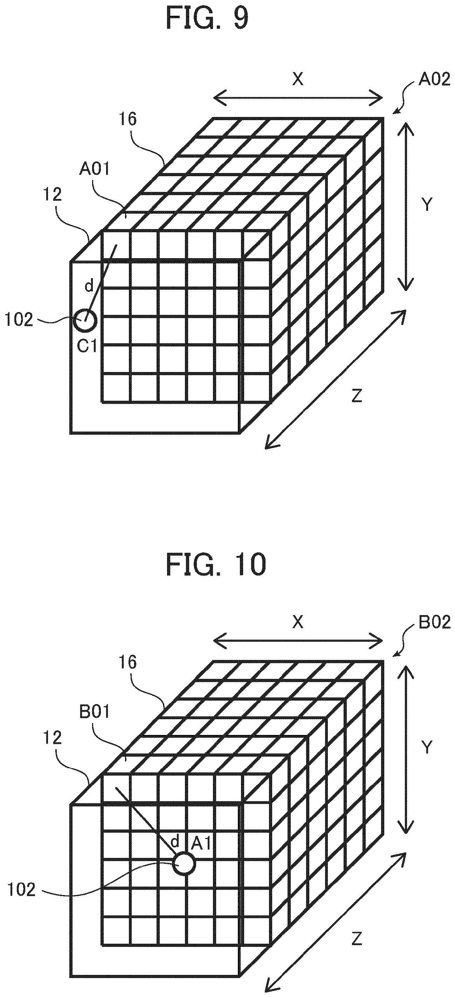

Processing performed by the control unit 103 to create the map of FIG. 6 based on the distance characteristic graph of FIG. 5 (measurement point: point C1, struck point: point A1) is described using FIG. 9.

The control unit 103 first divides the refractory brick 16 into a grid shape. In this description, each cell of the grid is called "voxel," and a group of voxels is called "voxel group." The size (for example, length of one side) of a single voxel is not particularly limited, and an exemplary length of one side of a single voxel in a grid shape (cubic shape) may be 1 mm.

FIG. 9 is a conceptual diagram showing a voxel group A02. FIG. 9 also shows the reception unit 102 arranged at point C1 on the surface of the steel shell 12.

The control unit 103 calculates a distance d between one voxel A01 and point C1, the voxel A01 being included in the voxel group A02. Subsequently, the control unit 103 refers to the distance characteristic graph (FIG. 5) and performs, in the voxel A01, processing of reflecting an amplitude (intensity) v corresponding to the distance d as a value. This processing is performed in every voxel of the voxel group A02. Consequently, the same amplitude (intensity) value is assigned to voxels situated at the same distance from point C1, and the same amplitude (intensity) is set in a concentric spherical manner having point C1 as its center.

The control unit 103 extracts only voxels present in the XZ plane passing point C1 and point A1 from voxels included in the voxel group A02. As a result, the two-dimensional heat map (FIG. 6) is generated.

The degree (e.g., color gradation) in the map of FIG. 6 shows the level of likelihood of the reflection position (including the position of the end 18) of the elastic wave 21 in the refractory brick 16. The map of FIG. 6 shows an approximate state of the remaining refractory brick 16.

An intensity (vertical axis) is drawn in the map of FIG. 6 to be paler for a weaker intensity and darker for a stronger intensity, for instance. Difference in the intensity may be expressed by means of colors.

In FIG. 6, only two black strips separately corresponding to two peaks in the graph of FIG. 5 are drawn for convenience. The two black strips in FIG. 6 show positions each having relatively high likelihood of the reflection position. In other words, they are likely to include the crack 19 or the end 18 in the refractory brick 16.

Determination of which of the crack 19 and the end 18 a black strip includes is made based on the distance from point C1, i.e., the measurement point. For example, the black strip situated closer to point C1 is likely to include the crack 19, whereas the black strip situated farther from point C1 is likely to include the end 18.

Specifically, FIG. 6 shows the peak on the left side (peak being likely to include the position of the crack 19) in the graph of FIG. 5 in a thick line and the peak on the right side (peak being likely to include the position of the end 18) in the graph of FIG. 5 in a thicker line (extra thick line).

Next, for each case where another point than point A1 is the struck point, with point C1 being kept as the measurement point, the control unit 103 performs the same processing as the processing described with reference to FIGS. 4 to 6 to thereby obtain a plurality of two-dimensional heat maps aside from FIG. 6.

For example, first, obtained is a two-dimensional heat map for a case where the measurement point is point C1 and the struck point is point C3. Subsequently, a two-dimensional heat map for a case where the measurement point is point C1 and the struck point is point A3 is obtained. In addition, a two-dimensional heat map for a case where the measurement point is point C1 and the struck point is another point than point A1, point C3, and point A3 is obtained.

Furthermore, the control unit 103 draws a map based on reception results of reception units 102 arranged at the remaining points (such as point A1).

For example, first, for a case where the measurement point is point A1 and the struck point is point C1, the control unit 103 performs the same processing as the processing described with reference to FIGS. 4 to 6 to thereby obtain a two-dimensional heat map (FIG. 7).

FIG. 7 is a conceptual diagram of a map based on the reception result of the reception unit 102 at point A1 (measurement point: point A1, struck point: point C1) and shows an XZ plane passing point C1 and point A1 in the furnace wall 11 shown in FIG. 3.

As with FIG. 6, FIG. 7 shows the site that is likely to include the position of the crack 19 in the distance characteristic graph in a thick line and the peak that is likely to include the position of the end 18 in an extra thick line, for convenience.

Processing by the control unit 103 to generate the map of FIG. 7 based on the distance characteristic graph which is not shown (measurement point: point A1, struck point: point C1) is described using FIG. 10.

The control unit 103 first divides the refractory brick 16 into a grid shape.

FIG. 10 is a conceptual diagram showing another voxel group B02 than the voxel group A02 (FIG. 9). FIG. 10 also shows the reception unit 102 arranged at point A1.

The control unit 103 calculates the distance d between a voxel B01 included in the voxel group B02 and point A1. Subsequently, the control unit 103 refers to the distance characteristic graph which is not shown (measurement point: point A1, struck point: point C1) and performs, in the voxel B01, processing to reflect an amplitude (intensity) v corresponding to the distance d as a value. This processing is performed for every voxel of the voxel group B02. Consequently, the same amplitude (intensity) value is assigned to voxels situated at the same distance from point A1, and the same amplitude (intensity) is set in a concentric spherical manner having point A1 as its center.

The control unit 103 extracts voxels situated in the XZ plane passing point C1 and point A1 from voxels included in the voxel group B02. As a result, the two-dimensional heat map (FIG. 7) is generated.

Next, for each case where another point than point C1 is the struck point, with point A1 being kept as the measurement point, the control unit 103 performs the same processing to thereby obtain two-dimensional heat maps aside from FIG. 7.

For example, first, obtained is a two-dimensional heat map for a case where the measurement point is point A1 and the struck point is point C3. Subsequently, a two-dimensional heat map for a case where the measurement point is point A1 and the struck point is point A3 is obtained. In addition, a two-dimensional heat map for a case where the measurement point is point A1 and the struck point is another point than point A1, point C3, and point A3 is obtained.

In addition, aside from FIGS. 6 and 7, the control unit 103 also obtains a two-dimensional heat map for a case where the measurement point is not point C1 or point A1 (such as a case where the measurement point is point C3 or point A3) in a similar manner.

Thereafter, the control unit 103 synthesizes the maps thus drawn to thereby generate a synthesized map.

FIG. 8 is a conceptual diagram of a synthesized map, in particular, a map (synthesized map) in which FIG. 6 is synthesized with FIG. 7, and shows an XZ plane passing point C1 and point A1 of the furnace wall 11 shown in FIG. 3.

In FIG. 8, two thick lines are each illustrated in positions between those in FIGS. 6 and 7.

Processing by the control unit 103 to generate the synthesized map of FIG. 8 based on the map (measurement point: point C1, struck point: point A1) of FIG. 6 and the map (measurement point: point A1, struck point: point C1) of FIG. 7 is described using FIGS. 9 and 10.

For synthesizing maps having the same measurement point but different struck points, the same processing as the processing described below may be also performed.

First, the control unit 103 refers to the voxel group A02 (measurement point: point C1, struck point: point A1) of FIG. 9 and the voxel group B02 (measurement point: point A1, struck point: point C1) of FIG. 10. Even in different voxel groups, voxels having the same coordinate indicate the same position in the refractory brick 16.

The control unit 103 sums the amplitude (intensity) values assigned to voxels (e.g., voxel A01 and voxel B01) having the same coordinate in the voxel group A02 (FIG. 9) and the voxel group B02 (FIG. 10) to calculate a new intensity value (synthesized value).

The synthesized value thus calculated is assigned to a voxel C01 (not shown) in another voxel group C02 (not shown) than the voxel group A02 (FIG. 9) and the voxel group B02 (FIG. 10), the voxel C01 having the same coordinate as that of the voxel A01 and the voxel B01.

The control unit 103 then extracts only voxels situated in an XZ plane passing point C1 and point A1 from voxels assigned with synthesized values in the new voxel group C02. As a result, the two-dimensional heat map (FIG. 8) is generated.

The control unit 103 also generates a similar map for a YZ plane passing point A1 and point A3 of the furnace 11 shown in FIG. 3 in the same manner.

Thereafter, a three-dimensional map is obtained from the map of the XZ plane and the map of the YZ plane.

The control unit 103 may obtain, as a three-dimensional map, a new voxel group C02 in which a synthesized value is assigned to each voxel. In the three-dimensional map, the size of the intensity (synthesized value) is also expressed by difference in color or color gradation.

The control unit 103 causes, for example, a display unit 104 described later to display the obtained map (heat map in this embodiment). As a result, the state of the refractory brick 16 can be visualized.

The obtained map includes information on not only the position of the end 18 (i.e., remaining thickness of the refractory brick 16) but also the position of the crack 19, and owing to this constitution, an operator can visually understand the state of the refractory brick 16 during an operation of the blast furnace.

An operator can repair the refractory brick 16 based on the obtained map.

That is, by referring to the map in which the state of the refractory brick 16 is visualized, an operator can determine the timing to repair the refractory brick 16 and can repair the refractory brick 16.

For instance, when generation of the crack 19 in the refractory brick 16 is discovered by reference to the map, the refractory brick 16 can be repaired even before a scheduled repair timing.

The number of the reception units 102 is not limited to 4 and may be fewer or more than 4. For instance, even if the number of the reception units 102 is 1, it is possible to obtain the map as described above (see, for example, FIGS. 6 and 7).

Meanwhile, from the viewpoint of more accurately finding the state of the refractory brick 16, the number of the reception units 102 is preferably 2 or more.

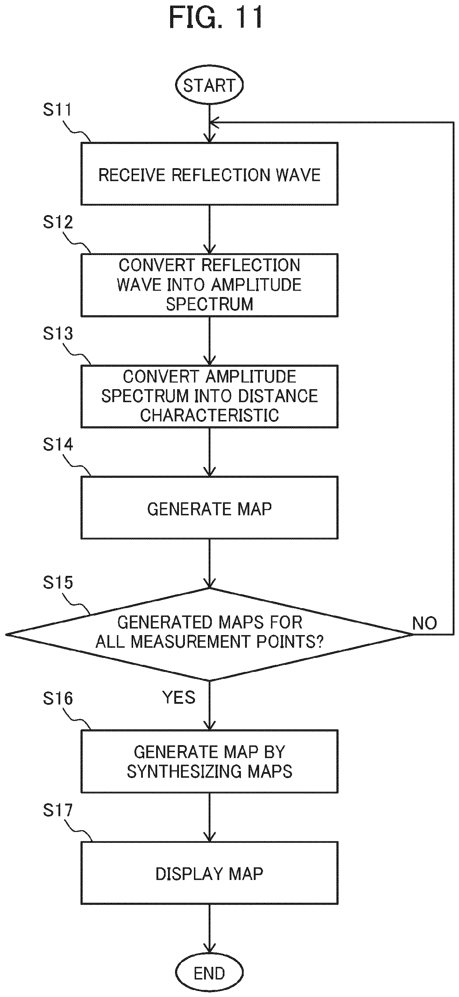

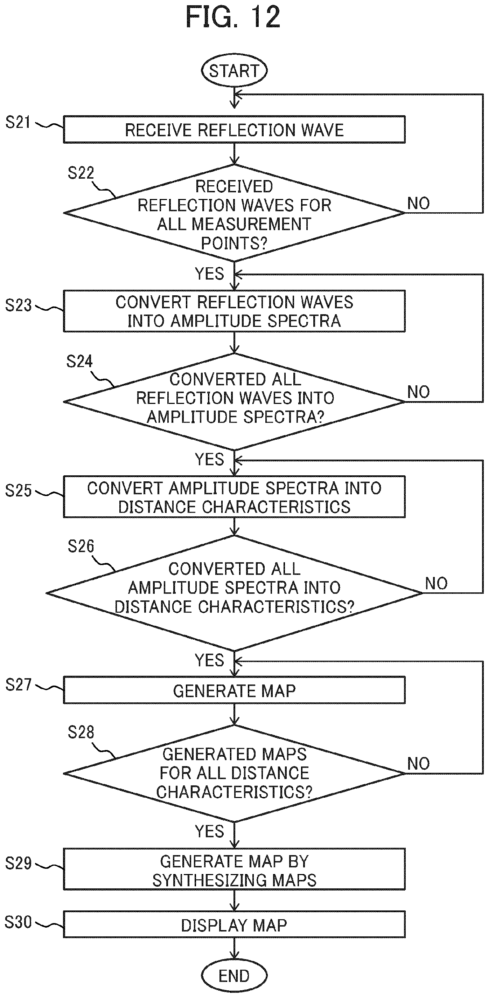

In summary, the processing performed by the control unit 103 in the embodiment may be exemplified by the processing described below based on FIG. 11 or FIG. 12.

It should be noted that while the processing described below is performed in a case where there are plural struck points per measurement point, there may be a single struck point per measurement point.

FIG. 11 is a flowchart showing an example of a processing flow performed by the control unit 103.

First, the reception unit 102 disposed at each measurement point (e.g., point C1, point A1, point C3, point A3) receives the reflection wave 22 as an acceleration signal (Step S11). In this step, the reflection wave 22 from each struck point is received at each measurement point.

The control unit 103 next converts the reflection wave 22 into an amplitude spectrum (see FIG. 4) (Step S12), converts the amplitude spectrum into a distance characteristic graph (see FIG. 5) (Step S13), and in addition generates a map based on the distance characteristic graph (see FIG. 6 or FIG. 7) (Step S14).

Unless maps for all of the struck points have been generated at all of the measurement points, the above-described steps are repeated ("NO" in Step S15). Once maps for all of the struck points have been generated at all of the measurement points ("YES" in Step S15), the control unit 103 synthesizes the generated maps to generate a synthesized map (see FIG. 8) (Step S16). Furthermore, the control unit 103 causes the display unit 104 described later to display the generated synthesized map (Step S17).

FIG. 12 is a flowchart showing another example of the processing flow performed by the control unit 103. First, the reception unit 102 disposed at each measurement point receives the reflection wave 22 as an acceleration signal (Step S21). In this step, the reflection wave 22 from each struck point is received at each measurement point.

Once reflection waves 22 from all of the struck points have been received at all of the measurement points ("YES" in Step S22), the control unit 103 converts the respective reflection waves 22 into amplitude spectra (see FIG. 4) (Step S23).

Once the reflection waves 22 have been all converted into amplitude spectra ("YES" in Step S24), the control unit 103 converts the respective amplitude spectra into the distance characteristic graphs (see FIG. 5) (Step S25).

Once the amplitude spectra have been all converted into distance characteristic graphs ("YES" in Step S26), the control unit 103 generates a map (see FIG. 6 or FIG. 7) based on each of the distance characteristic graphs (Step S27).

Once maps for all of the distance characteristic graphs have been generated ("YES" in Step S28), the control unit 103 synthesizes the generated maps to generate a synthesized map (see FIG. 8) (Step S29). In addition, the control unit 103 causes the display unit 104 described later to display the generated synthesized map (Step S30).

Examples of the cases where the status visualization apparatus is applied to a CS-structure blast furnace have been described above.

Meanwhile, a furnace (industrial furnace) to which the status visualization apparatus can be applied is not limited thereto, and examples thereof include a furnace provided with a furnace wall including a steel shell and a refractory (refractory brick). Specific examples thereof include a blast furnace (blast furnace with three-layer structure) other than the CS-structure blast furnace, an electric furnace, a converter, a ladle (RH furnace or the like), a torpedo car, and a gasification melting furnace.

[Another Embodiment (Embodiment A)]

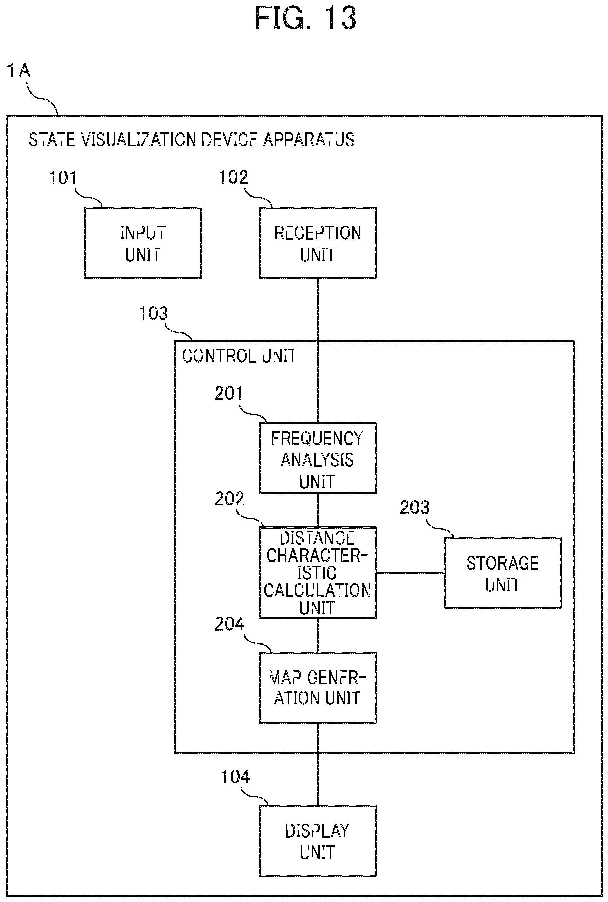

Next, a status visualization apparatus 1A according to another embodiment (referred to as "Embodiment A") is described using FIGS. 13 to 18.

<Configuration of Status Visualization Apparatus 1A>

FIG. 13 is a functional block diagram of the state visualization apparatus 1A.
As shown in FIG. 13, the status visualization apparatus 1A includes the input unit 101, the reception unit 102, the control unit 103, and the display unit 104.

<<Input Unit 101>>

The input unit 101 is constituted of an impact hammer, a vibrator, or the like.
When the input unit 101 is constituted of an impact hammer, use is made of an impact hammer with frequency characteristics which allow measurement of the expected maximum value of the resonant frequency. The expected value of the resonant frequency can be calculated through simulation.

<<Reception Unit 102>>

The reception unit 102 is constituted of, for example, an accelerometer.
When the reception unit 102 is constituted of an accelerometer, use is preferably made of an accelerometer capable of detecting acceleration in a normal direction of the steel shell 12 (see FIG. 1).

<<Control Unit 103>>

The control unit 103 controls the entire status visualization apparatus 1A.
The control unit 103 is constituted of, for example, one or more processors.
The control unit 103 may be constituted of a logic circuit (hardware) formed in, for example, an integrated circuit (IC chip).
The control unit 103 may be constituted of software with use of a central processing unit (CPU).
The control unit 103 may be constituted of a field-programmable gate array (FPGA) or an application-specific integrated circuit (ASIC), for example.
The control unit 103 includes a frequency analysis unit 201, a distance characteristic calculation unit 202, a storage unit 203, and a map generation unit 204. These units may each include an independent casing.
The frequency analysis unit 201 is constituted of, for example, a fast Fourier transform (FFT) analyzer. The distance characteristic calculation unit 202, the storage unit 203, and the map generation unit 204 are constituted of, for example, a personal computer (PC).
The control unit 103 may be provided with a data bus for communicating data between the above-described units.
Some of the respective units constituting the control unit 103 may be provided in a separate terminal (not shown).

(Frequency Analysis Unit 201)

The frequency analysis unit 201 receives a reflection wave received by the reception unit 102, performs frequency analysis, and calculates frequency characteristics.
As an exemplary frequency characteristic to be output, an amplitude spectrum is used, but this is not the sole case; for instance, a frequency response function calculated from an elastic wave and a reflection wave may be used, the elastic wave being input by the input unit 101 and the reflection wave being received by the reception unit 102.
Examples of the frequency analysis method include discrete Fourier transform (DFT) and fast Fourier transform (FFT) which rapidly executes DFT, but these are not the sole cases; the frequency analysis may be carried out through the wavelet transform.
The frequency analysis unit 201 may directly perform frequency analysis on the reflection wave received from the reception unit 102 to obtain the amplitude spectrum. The frequency analysis unit 201 may also perform frequency analysis only on a signal in a specific frequency band with use of a band pass filter to obtain the amplitude spectrum. Moreover, the frequency analysis unit 201 may perform frequency analysis on a signal that is cut out from the received reflection wave with use of a window function to obtain the amplitude spectrum.

<<Calculation of Frequency Characteristics by Frequency Analysis Unit 201>>

As the frequency characteristic analysis method by the frequency analysis unit 201, a method involving discrete Fourier transform is described.

At the time t, hypothetically, the sampling number of an acceleration signal that is measured by the reception unit 102 is n, and the sampled signal that is sampled from the acceleration signal is a(n). At this time, the discrete Fourier transform A(k) for a(n) can be calculated by the following Formula (1).

[Mathematical Formula 1]

$$A(k) = \sum_{n=0}^{N-1} a(n)e^{-j\frac{2\pi}{N}kn} \qquad (1)$$

Here, k is a sampling number of a frequency (k=0, 1, ..., N-1), N is a gate length of a sampled signal a(n) subjected to the discrete Fourier transform.

The lower limit of the gate length N can be calculated from the maximum frequency $f_{max}$ to be observed, the reciprocating time T of an elastic wave based on the maximum thickness of the refractory brick 16, and the number of reciprocations m of an elastic wave used in frequency analysis. When a sampling interval of an acceleration signal is $\Delta t$, the maximum frequency $f_{max}$ to be observed can be calculated by the following Formula (2).

[Mathematical Formula 2]

$$\Delta t = \frac{1}{2f_{max}} \qquad (2)$$

In this calculation, the time width of a signal subjected to the frequency analysis with the gate length N is determined by N x $\Delta t$, and this time width needs to be equal to or more than the reciprocating time m x T for m reciprocations of the elastic wave. Hence, the lower limit of the gate length N is determined by the following Formula (3).

[Mathematical Formula 3]

$$N \geq \frac{mT}{\Delta t} = 2mTf_{max} \qquad (3)$$

The upper limit of the gate length N is determined, for example, based on an input interval of elastic waves by the input unit 101 or time during which at least a certain level of attenuation of the acceleration signal is observed.

The amplitude spectrum of A(k) can be calculated from the absolute value |A(k)| of A(k).

(Distance Characteristic Calculation unit 202)

The distance characteristic calculation unit 202 converts the frequency characteristics calculated by the frequency analysis unit 201 into distance characteristics.

In an exemplary method for converting frequency characteristics into distance characteristics, the wavelength calculated from a sound velocity and a frequency may be used as a distance, or a frequency may be converted into a distance using the relationship between the thickness of the refractory brick 16 and the frequency read out from the storage unit 203, the relationship between the thickness and the frequency being preliminarily obtained through simulation and stored in the storage unit 203.

<<Calculation of Distance Characteristics by Distance Characteristic Calculation Unit 202>>

As the method for calculating distance characteristics by the distance characteristic calculation unit 202, a method for calculating distance characteristics using the sound velocity is described.

The frequency $f_k$ of the sampled number k of the amplitude spectrum |A(k)| calculated by the frequency analysis unit 201 can be calculated by the following Formula (4).

[Mathematical Formula 4]

$$f_k = \frac{k f_{\max}}{N} \qquad (4)$$

When the sound velocity is c, the wavelength $\lambda_k$ can be calculated by the following Formula (5).

[Mathematical Formula 5]

$$\lambda_k = \frac{c}{f_k} = \frac{Nc}{k f_{\max}} \qquad (5)$$

At this time, the distance characteristic F $(\lambda_k)$ is determined by the following Formula (6).

[Mathematical Formula 6]

$$F(\lambda_k) = \left| A(k) \right| \qquad (6)$$

(Storage Unit 203)

The storage unit 203 stores, for example, the acceleration signal measured by the reception unit 102, the processing result of each unit in the control unit 103, and various data used in the processing.

The storage unit 203 is constituted of, for example, a random access memory (RAM), or a storage apparatus such as a hard disk.

(Map Generation Unit 204)

The map generation unit 204 generates a map showing likelihood of the reflection position (i.e., reflection position likelihood) of the elastic wave 21 in the refractory brick 16 based on the distance characteristics calculated by the distance characteristic calculation unit 202.

In the embodiment, the map generation unit 204 calculates the likelihood of the reflection position using the distance characteristics calculated by the distance characteristic calculation unit 202 and subsequently generates a map showing the thus calculated likelihood of the reflection position as described below.

((Calculation of Likelihood of Reflection Position at Arbitrary Point by Map Generation Unit 204))

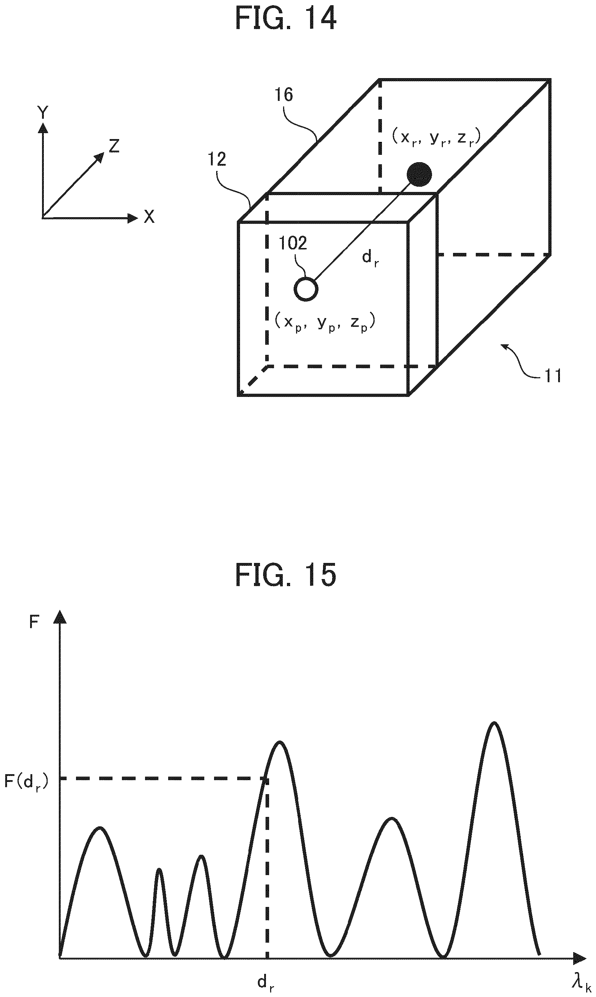

The method for calculating likelihood of the reflection position at an arbitrary point R in the refractory brick 16 by the map generation unit 204 is described with reference to FIGS. 14 and 15.

FIG. 14 is a perspective view showing the furnace wall 11 with the reception unit 102 being attached to the steel shell 12. FIG. 15 is a conceptual diagram of the distance characteristics calculated by the distance characteristic calculation unit 202.

In FIG. 14, the position where the reception unit 102 is attached has a spatial coordinate $(x_p, y_p, z_p)$, and an arbitrary point R in the refractory brick 16 has a spatial coordinate $(x_r, y_r, z_r)$.

At this time, the distance $d_r$ between the point R in the refractory brick 16 and the position where the reception unit 102 is attached can be calculated by the following Formula (7).
[Mathematical Formula 7]

$$d_r = \sqrt{(x_r - x_p)^2 + (y_r - y_p)^2 + (z_r - z_p)^2} \quad (7)$$

When the distance $d_r$ thus obtained is applied to the distance characteristics calculated by the distance characteristic calculation unit 202 to calculate $F(d_r)$, the likelihood $L(x_r, y_r, z_r)$ of the reflection position at the point R in the refractory brick 16 can be calculated by the following Formula (8) using the distance characteristic $F(d_r)$ of the distance $d_r$.
[Mathematical Formula 8]

$$L(x_r, y_r, z_r) = \frac{F(d_r)}{\max(|A(k)|)} \quad (8)$$

In the formula, k=0, 1, ..., N-1.
Here, max(x) is a function for calculating the largest element in the parentheses.
Next, described with reference to FIG. 16 is the method for calculating the likelihood of the reflection position at an arbitrary point R in the refractory brick 16 by the map generation unit 204 in a case where a plurality of reception units 102 separately receive reflection waves 22 at plural positions.
FIG. 16 is a perspective view showing the furnace wall 11 with M reception units 102 being attached to the steel shell 12.
In FIG. 16, the positions where the reception units 102 are attached have spatial coordinates $(x_{p0}, y_{p0}, z_{p0})$, $(x_{p1}, y_{p1}, z_{p1})$, ..., $(x_{pM-1}, y_{pM-1}, z_{pM-1})$, and the arbitrary point R in the refractory brick 16 has a spatial coordinate $(x_r, y_r, z_r)$.
At this time, the distance $d_{rm}$ between the point R in the refractory brick 16 and the position where the mth reception unit 102 is attached can be calculated by the following Formula (9).
[Mathematical Formula 9]

$$d_{rm} = \sqrt{(x_{rm} - x_p)^2 + (y_{rm} - y_p)^2 + (z_{rm} - z_p)^2} \quad (9)$$

In the formula, m=0, 1, ..., M-1.
When the distance $d_{rm}$ thus obtained is applied to the distance characteristics calculated by the distance characteristic calculation unit 202 to calculate $F(d_{rm})$, the likelihood $L(x_r, y_r, z_r)$ of the reflection position at the point R in the refractory brick 16 can be calculated by the following Formula (10) using the distance characteristic $F(d_{rm})$ of the distance $d_{rm}$.
[Mathematical Formula 10]

$$L(x_r, y_r, z_r) = \sum_{m=0}^{M-1} \frac{F(d_{rm})}{\max(|A(k)|)} \quad (10)$$

((Generation of Map by Map Generation Unit 204))

The map generation unit 204 generates a map in which the level of likelihood of a reflection position is visualized.
The map is preferably a two-dimensional map or a three-dimensional map. In the embodiment, a heat map is selected as an example of the map. In the heat map in the embodiment, a distance from a measurement point is shown on the vertical axis and the horizontal axis, and an amplitude (intensity) is drawn in color gradation. The heat map may express the level of likelihood of a reflection position in hue. The heat map may be a three-dimensional heat map or a two-dimensional heat map of an arbitrary cross section selected by a user of the state visualization apparatus 1A.

<<Display Unit 104>>

The display unit 104 displays a heat map 401 generated by the map generation unit 204 or a user interface (UI) for operating the state visualization apparatus 1A.
FIG. 17 is a schematic view showing the display unit 104 displaying the heat map 401.
The display unit 104 is constituted of, for example, a liquid crystal display (LCD), an organic electroluminescence display (OELD), or another device.

<Processing by State Visualization Apparatus 1A>

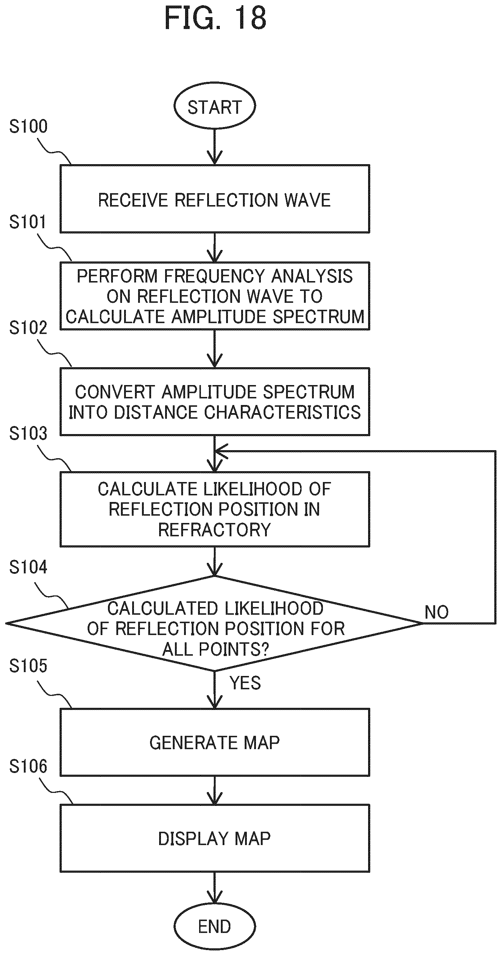

Processing performed by the state visualization apparatus 1A is described using FIG. 18.
FIG. 18 is a flowchart showing an example of a processing flow in the state visualization apparatus 1A.
The reception unit 102 first receives a reflection wave signal (Step S100).
Next, the frequency analysis unit 201 receives the reflection wave signal from the reception unit 102 and performs frequency analysis on the received signal to calculate an amplitude spectrum (Step S101).
Next, the distance characteristic calculation unit 202 converts the amplitude spectrum calculated by the frequency analysis unit 201 into a distance characteristic (Step S102).
Next, the map generation unit 204 calculates likelihood of a reflection position in the refractory brick 16 using the distance characteristic calculated by the distance characteristic calculation unit 202 (Step S103).
The map generation unit 204 determines whether the likelihood of the reflection position has been calculated for all of the points in the refractory brick 16 (Step S104). In a case where the likelihood of the reflection position has not been calculated for all of the points yet ("NO" in Step S104), calculation of the likelihood of the reflection position is repeatedly performed (Step S103).
It should be noted that in a case where the likelihood of the reflection position has not been calculated for all of the points yet ("NO" in Step S104), the same reception unit 102 again or another reception unit 102 may receive a reflection wave (Step S100). In this case, subsequently, an amplitude spectrum is calculated (Step S101), the calculated amplitude spectrum is converted into a distance characteristic (Step S102), and the likelihood of the reflection position is calculated using the distance characteristic (Step S103).
In a case where the likelihood of the reflection position has been calculated for all of the points ("YES" in Step S104), the map generation unit 204 generates a map in which the level of likelihood of the reflection position is reflected (Step S105). In the embodiment, the map generation unit 204 generates the heat map 401 in which the level of likelihood of a reflection position is reflected in color gradation.
The control unit 103 then drives and controls the display unit 104 such that the display unit 104 displays the map generated by the map generation unit 204 (Step S106). In the embodiment, the control unit 103 drives and controls the display unit 104 such that the heat map 401 generated by the map generation unit 204 is displayed in the display unit 104.

[Another Embodiment (Embodiment B)]

Next, another embodiment (called "Embodiment B") is further described.
With regard to Embodiment B, only differences from Embodiment A are described. In particular, Embodiment B is different from Embodiment A in the distance characteristic calculation unit 202.

(Distance Characteristic Calculation unit 202)

Hereinbelow, described is a method in which the distance characteristic calculation unit 202 preliminarily acquires the relationship between the thickness of the refractory brick 16 and the frequency through simulation and stores the relationship in the storage unit 203, and the relationship between the thickness and the frequency is read out from the storage unit 203 to convert the frequency into a distance.

<<Calculation of Distance Characteristics by Distance Characteristic Calculation Unit 202>>

As the method of calculating a distance characteristic by the distance characteristic calculation unit 202, a method of calculating a distance characteristic using a result of vibration application simulation according to the finite element method is described.
The finite element method is a numerical analysis technique for approximately solving differential equations, in which a continuum is divided into elements having finite sizes for calculation. The ultrasound propagation motion in a continuum is expressed by the differential equation shown in the following Formula (11).

[Mathematical Formula 11]

$$\rho \frac{\partial^2 u_i}{\partial t^2} - \frac{\partial^2 \sigma_{ij}}{\partial x_j} - b_i = 0 \qquad (11)$$

Here, $\rho$ represents a density, $\sigma$ a stress, x a coordinate, i and j numerals in coordinate axes, b a body force, u a displacement, and t a time.

When the Formula (11) above is subjected to division into elements having finite sizes, the ultrasound propagation motion at the time $t_n$ is expressed by the following Formula (12).

[Mathematical Formula 12]

$$[M]\{u''\} + [C]\{u'\} + [K]\{u\} = \{f\} \qquad (12)$$

Here, [M] represents an element mass matrix, [C] an element attenuation matrix, [K] an element rigidity matrix, {u"} an acceleration vector, {u'} a velocity vector, {u} a displacement vector, and {f} an external force vector. Established here is a relationship where u" is an acceleration when a displacement u is differentiated twice, and u' is a velocity when a displacement u is differentiated once.

The distance characteristic calculation unit 202 generates a three-dimensional model of a furnace (blast furnace) that is divided into elements having definite sizes. The three-dimensional model of a furnace may be of an entire furnace. The three-dimensional model of a furnace may also be of only the refractory brick 16 whose thickness is measured and an outer layer region of the refractory brick 16. The distance characteristic calculation unit 202 generates a plurality of three-dimensional models having different thicknesses of the refractory brick 16.

The distance characteristic calculation unit 202 successively calculates the ultrasound propagation motion of the above Formula (12) using each of the generated three-dimensional models.

The ultrasound propagation motion is simulated with use of the three-dimensional model of the thickness T of the refractory brick 16, and, as a result, the acceleration signal observed at an acceleration measurement position {xp} is defined as $a_{Txp}(n)$. At this time, the discrete Fourier transform $A_{Txp}(k)$ of $a_{Txp}(n)$ can be calculated by the following Formula (13).

[Mathematical Formula 13]

$$A_{Tx_p}(k) = \sum_{n=0}^{N-1} a_{Tx_p}(n) e^{-j\frac{2\pi}{N}kn} \qquad (13)$$

In the formula, k=0, 1, ..., N-1.

Using the $A_{Txp}(k)$, the distance characteristic calculation unit 202 calculates the resonant frequency $f_T$ of the thickness T of the refractory brick 16 according to the following equation (14).

[Mathematical Formula 14]

$$f_T = \frac{f_{\max} \underset{k}{\arg\max}\left(\left|A_{Tx_p}(k)\right|\right)}{N} \qquad (14)$$

In the formula, k=0, 1, ..., N-1.

Here, argmax (x) is a function to calculate a parameter below argmax which maximizes the element in the parentheses.

The distance characteristic calculation unit 202 performs calculation of the above Formula (14) for each thickness T of the refractory brick 16, thereby deriving a function for converting between the thickness T of the refractory brick 16 and a resonant frequency f.

The distance characteristic calculation unit 202 may derive a function for associating the thickness of the refractory brick 16 with the resonant frequency in a one-to-one manner through simulation with the thickness of the refractory brick 16 for each resolution by which the thickness is determined. Moreover, the distance characteristic calculation unit 202 may derive an approximation expression for converting between the thickness of the refractory brick 16 and the resonant frequency through simulation with a representative point.

[REFERENCE SIGNS LIST]

1, 1A: state visualization apparatus
11: furnace wall
12: steel shell
13: unshaped refractory
14: copper plate
15: unshaped refractory
16: refractory brick
17: hole
18: end
19: crack
21: elastic wave
22: reflection wave
101: input unit
102: reception unit
103: control unit
104: display unit
201: frequency analysis unit
202: distance characteristic calculation unit
203: storage unit
204: map generation unit
401: heat map (map)

**Claims**

1. A refractory state visualization method comprising:

   a step of inputting an elastic wave to a furnace wall having a refractory;
   a step of receiving a reflection wave of the elastic wave;
   a step of determining a frequency characteristic of the reflection wave;
   a step of determining a distance characteristic from the frequency characteristic; and
   a step of generating a map showing likelihood of a reflection position in the refractory based on the distance characteristic.

2. The refractory state visualization method according to claim 1,

wherein the distance characteristic includes a plurality of distance characteristics, and
the map is generated by synthesizing maps that are separately generated for the plurality of distance characteristics.

3. A refractory repair method comprising repairing a refractory based on a map generated by the refractory state visualization method according to claim 1 or 2.

4. A refractory state visualization apparatus comprising:

an input unit adapted to input an elastic wave to a furnace wall having a refractory;
a reception unit adapted to receive a reflection wave of the elastic wave; and
a control unit adapted to determine a frequency characteristic of the reflection wave, determine a distance characteristic from the frequency characteristic, and generate a map showing likelihood of a reflection position in the refractory based on the distance characteristic.

# FIG. 1

# FIG. 2

FIG. 3

FIG. 4

FIG. 5

# FIG. 6

# FIG. 7

# FIG. 8

# FIG. 9

# FIG. 10

# FIG. 11

START

S11 → RECEIVE REFLECTION WAVE

S12 → CONVERT REFLECTION WAVE INTO AMPLITUDE SPECTRUM

S13 → CONVERT AMPLITUDE SPECTRUM INTO DISTANCE CHARACTERISTIC

S14 → GENERATE MAP

S15 → GENERATED MAPS FOR ALL MEASUREMENT POINTS? — NO

YES

S16 → GENERATE MAP BY SYNTHESIZING MAPS

S17 → DISPLAY MAP

END

# FIG. 12

START

S21 — RECEIVE REFLECTION WAVE

S22 — RECEIVED REFLECTION WAVES FOR ALL MEASUREMENT POINTS? — NO

YES

S23 — CONVERT REFLECTION WAVES INTO AMPLITUDE SPECTRA

S24 — CONVERTED ALL REFLECTION WAVES INTO AMPLITUDE SPECTRA? — NO

YES

S25 — CONVERT AMPLITUDE SPECTRA INTO DISTANCE CHARACTERISTICS

S26 — CONVERTED ALL AMPLITUDE SPECTRA INTO DISTANCE CHARACTERISTICS? — NO

YES

S27 — GENERATE MAP

S28 — GENERATED MAPS FOR ALL DISTANCE CHARACTERISTICS? — NO

YES

S29 — GENERATE MAP BY SYNTHESIZING MAPS

S30 — DISPLAY MAP

END

# FIG. 13

1A

STATE VISUALIZATION DEVICE APPARATUS

101

INPUT
UNIT

102

RECEPTION
UNIT

103

CONTROL UNIT

201

FREQUENCY
ANALYSIS
UNIT

202

DISTANCE
CHARACTER-
ISTIC
CALCULATION
UNIT

203

STORAGE
UNIT

204

MAP GENER-
ATION UNIT

104

DISPLAY
UNIT

# FIG. 14

# FIG. 15

# FIG. 16

# FIG. 17

# FIG. 18

START

S100
RECEIVE REFLECTION WAVE

S101
PERFORM FREQUENCY ANALYSIS ON REFLECTION WAVE TO CALCULATE AMPLITUDE SPECTRUM

S102
CONVERT AMPLITUDE SPECTRUM INTO DISTANCE CHARACTERISTICS

S103
CALCULATE LIKELIHOOD OF REFLECTION POSITION IN REFRACTORY

S104
CALCULATED LIKELIHOOD OF REFLECTION POSITION FOR ALL POINTS? — NO

YES

S105
GENERATE MAP

S106
DISPLAY MAP

END

## INTERNATIONAL SEARCH REPORT

| International application No. |
|---|
| **PCT/JP2023/022848** |

### A. CLASSIFICATION OF SUBJECT MATTER

***C21B 7/24***(2006.01)i; ***C21C 5/44***(2006.01)i; ***F27D 1/00***(2006.01)i; ***F27D 1/16***(2006.01)i; ***G01N 29/06***(2006.01)i
FI:    F27D1/00 V; C21B7/24 306; C21C5/44 Z; F27D1/16 Z; G01N29/06

According to International Patent Classification (IPC) or to both national classification and IPC

### B. FIELDS SEARCHED

Minimum documentation searched (classification system followed by classification symbols)

F27D1/00; C21B7/24; C21C5/44; F27D1/16; G01N29/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2021/207044 A1 (PANERATECH, INC.) 14 October 2021 (2021-10-14)<br>entire text | 1-4 |
| A | JP 2001-294918 A (NIPPON STEEL CORP) 26 October 2001 (2001-10-26)<br>entire text | 1-4 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 July 2023** | **01 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2023/022848**

| Patent document cited in search report | | | Publication date (day/month/year) | Patent family member(s) | | | Publication date (day/month/year) |
|---|---|---|---|---|---|---|---|
| WO | 2021/207044 | A1 | 14 October 2021 | EP | 4133261 | A1 | |
| | | | | BR | 112022020068 | A2 | |
| | | | | JP | 2023-520576 | A | |
| JP | 2001-294918 | A | 26 October 2001 | (Family: none) | | | |

Form PCT/ISA/210 (patent family annex) (January 2015)

**REFERENCES CITED IN THE DESCRIPTION**

**Patent documents cited in the description**

• JP 62297710 A

• JP 8219751 A